# EUROPÄISCHE PATENTSCHRIFT

(11) **EP 2 643 571 B1**
(45) Veröffentlichungstag und Bekanntmachung des Hinweises auf die Patenterteilung: **24.02.2016**
(21) Anmeldenummer: 11787870.2
(22) Anmeldetag: 24.11.2011
(51) Int. Cl.: F02B 37/18

(54) **MONTAGEVERFAHREN MIT EINER MONTAGEHILFE FÜR EINEN AKTUATOR**
MOUNTING METHOD, MOUNTING AID, ACTUATOR
PROCÉDÉ DE MONTAGE, AIDE DE MONTAGE, ACTIONNEUR

(30) Priorität: 25.11.2010 DE 102010061948
(43) Veröffentlichungstag der Anmeldung: 02.10.2013
(73) Patentinhaber: Mahle International GmbH, 70376 Stuttgart (DE)
(72) Erfinder: DREHER, Frank, 72172 Sulz (DE); NAUNHEIM, Dirk, 70176 Stuttgart (DE); SCHÄFLEIN, Jochen, 70327 Stuttgart (DE)
(74) Vertreter: BRP Renaud & Partner mbB Rechtsanwälte Patentanwälte Steuerberater
(86) Internationale Anmeldenummer: PCT/EP2011/070886
(87) Internationale Veröffentlichungsnummer: WO 2012/069563

(56) Entgegenhaltungen:
- EP-A1- 1 306 562
- WO-A1-2009/105405
- JP-A- 5 223 108
- US-A- 4 766 804
- US-A- 5 727 447

## Beschreibung

Die vorliegende Erfindung betrifft ein Verfahren zum Montieren eines Aktuators zur Betätigung eines Waste-Gate-Ventils einer Turbine, insbesondere eines Abgasturboladers. Die Erfindung betrifft außerdem eine Montagehilfe für die Montage eines Aktuators zur Betätigung eines Waste-Gate-Ventils einer Turbine, insbesondere eines Abgasturboladers. Ferner betrifft die vorliegende Erfindung einen Aktuator zur Betätigung eines Waste-Gate-Ventils einer Turbine, insbesondere eines Abgasturboladers. Schließlich betrifft die Erfindung eine Verwendung einer Montagehilfe.

Zur Leistungssteuerung einer Turbine, insbesondere eines Abgasturboladers, kann ein Bypass zur Umgehung eines Turbinenrads der Turbine vorgesehen sein, der üblicherweise als Waste-Gate bezeichnet wird und der mit Hilfe eines entsprechenden Ventils gesteuert werden kann, das üblicherweise als Waste-Gate-Ventil bezeichnet wird. Zur Betätigung eines derartigen Waste-Gate-Ventils ist ein Aktuator vorgesehen, der hydraulisch oder pneumatisch oder elektromotorisch betrieben werden kann. Ein derartiger Aktuator kann mit einer Betätigungsstange ausgestattet sein, über die der Aktuator bspw. mit einem Antriebshebel des Waste-Gate-Ventils gekoppelt ist, bspw. um die drehfest mit dem Antriebshebel verbundene Ventilklappe durch Verschwenken des Antriebshebels um eine Schwenkachse den Öffnungsgrad der Ventilklappe und somit den Durchfluss durch das Waste-Gate-Ventil zu steuern. Der Aktuator kann hierzu die Betätigungsstange üblicherweise bidirektional antreiben, wobei die Betätigungsstange grundsätzlich Zugkräfte und/oder Druckkräfte übertragen kann. Während der Aktuator eine Eingangsseite der Betätigungsstange linear antreibt, bewegt sich eine Ausgangsseite der Betätigungsstange, die beabstandet zur Schwenkachse des Antriebshebels mit dem Antriebshebel gekoppelt ist, auf einer Kreisbahn. Somit führt die Betätigungsstange eine vergleichsweise komplexe räumliche Bewegung aus, wofür sie entsprechende Bewegungsfreiheitsgrade benötigt.

Es hat sich gezeigt, dass es beim Montieren des Aktuators häufig zu einer unzulässigen Auslenkung der Betätigungsstange kommt, bspw. beim Einfädeln der Betätigungsstange an einem Durchgang eines Flansches, an dem der Aktuator befestigt werden soll. Eine unzulässige Auslenkung der Betätigungsstange kann zu einer Beeinträchtigung der ordnungsgemäßen Funktion des Aktuators führen und kann aufwändige Justiermaßnahmen oder Reparaturen nach sich ziehen.

Die vorliegende Erfindung beschäftigt sich mit dem Problem, einen Weg aufzuzeigen, der das Montieren des Aktuators erleichtert.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Aktuator für seine Montage mit einer Montagehilfe auszustatten, die eine unzulässige Auslenkung der Betätigungsstange verhindert. Bei angebrachter Montagehilfe lässt sich der Aktuator leicht handhaben, ohne die Gefahr einer unerwünschten Auslenkung der Betätigungsstange, die zu einer Beschädigung oder Fehlfunktion führen könnte. Hierdurch wird der Montagevorgang erheblich vereinfacht. Nacharbeiten und Reparaturen lassen sich dadurch vermeiden.

Nach dem Montieren des Aktuators kann die Montagehilfe entfernt werden. Dabei ist es grundsätzlich möglich, die Montagehilfe so auszugestalten, dass es bei am Aktuator angebrachter Montagehilfe grundsätzlich möglich ist, die Betätigungsstange an ihrem ausgangsseitigen Ende mit dem Waste-Gate-Ventil zu koppeln, insbesondere mit einem Antriebshebel des Waste-Gate-Ventils zu verbinden. Somit kann die Montagehilfe solange am Aktuator verbleiben, bis auch die mechanische Kopplung mit dem Waste-Gate-Ventil hergestellt ist. Hierdurch kann die Gefahr einer unerwünschten Auslenkung der Betätigungsstange bei entfernter Montagehilfe signifikant reduziert werden, da die Betätigungsstange in diesem Fall eingangsseitig am Aktuator und ausgangsseitig am Waste-Gate-Ventil abgestützt ist.

Die Montagehilfe kann gemäß einer besonderen Ausführungsform auch schon im Vorfeld der Montage des Aktuators an der Turbine bzw. am Turbolader zur Anwendung kommen, also quasi bei der Herstellung des Aktuators. Beispielsweise kann eine solche Montagehilfe zum Festlegen der Relativlage der Betätigungsstange bezüglich eines Gehäuses des Aktuators verwendet werden, um bei einer vorbestimmten bzw. definierten Relativlage an einem vom Aktuatorgehäuse entfernten Ende der Betätigungsstange ein Verbindungselement anbringen zu können, das anschließend dann einen festen Bestandteil der Betätigungsstange, nämlich deren Ausgangsende bildet. Das Verbindungselement kann z.B. dazu dienen, die Betätigungsstange ausgangsseitig mit einem Antriebshebel des Waste-Gate-Ventils zu verbinden. Zweckmäßig kann das Verbindungselement an die Betätigungsstange angeschweißt werden. Die Lagefixierung der Betätigungsstange bezüglich des Aktuatorgehäuses während der Herstellung des Aktuators ist ein weiterer Kerngedanke der vorliegenden Erfindung, der auch unabhängig von der Verwendung der Montagehilfe beim Montieren des Aktuators an der Turbine bzw. am Turbolader betrachtet und beansprucht werden kann.

Besonders vorteilhaft ist eine Ausführungsform, bei welcher die Montagehilfe ein axiales Verschieben der Betätigungsstange verhindert. Hierdurch kann insbesondere vermieden werden, dass durch unachtsame Krafteinleitung in die Betätigungsstange unzulässig große Kräfte in das Aktuatorgehäuse bzw. in einen darin untergebrachten Antrieb bzw. ein Getriebe übertragen werden. Ferner lässt sich dadurch eine vorbestimmte Relativlage zwischen Betätigungsstange und Aktuatorgehäuse für die Herstellung bzw. Montage sicherstellen.

Entsprechend einer vorteilhaften Ausführungsform kann die Montagehilfe als Mehrwegteil ausgestaltet sein und am Aktuator im Rahmen der Montage des Aktuators, insbesondere am Abgasturbolader, angebracht werden. Somit montiert der jeweilige Monteur zunächst die wiederverwendbare Montagehilfe am Aktuator, um so die Betätigungsstange zu sichern. Anschließend montiert der Monteur den Aktuator mit angebrachter Montagehilfe relativ zur Turbine, z. B. an einem Verdichter eines die Turbine aufweisenden Abgasturboladers. Anschließend kann der Monteur die Montagehilfe wieder vom Aktuator entfernen und für die Montage des nächsten Aktuators verwenden. Bei anderen Ausführungen kann die Montagehilfe bereits bei der Herstellung des Aktuators montiert werden und solange an dem Aktuator verbleiben, bis der Aktuator montiert ist. Somit kann die Montagehilfe auch als Transportsicherung dienen.

Bei einer alternativen Ausführungsform kann die Montagehilfe als Einwegteil ausgestaltet sein und insbesondere am Aktuator bereits im Rahmen der Herstellung des Aktuators angebracht werden. Der Monteur der Turbine, kann in diesem Fall einfach den bereits mit der Montagehilfe ausgestatteten Aktuator relativ zur Turbine montieren. In diesem Fall dient die Montagehilfe auch als Transportsicherung, um auch während des Transport des Aktuators eine unzulässige Auslenkung der Betätigungsstange zu vermeiden. Die als Wegwerfteil konzipierte Montagehilfe kann beim Entfernen vom Aktuator zerstört werden, wozu sie bspw. mit wenigstens einer geeigneten Sollbruchstelle ausgestattet sein kann, um das Entfernen der Montagehilfe zu vereinfachen.

Alternativ ist es ebenso möglich, eine wiederverwendbare Montagehilfe bereits im Rahmen der Herstellung des Aktuators daran anzubringen. In diesem Fall muss logistisch dafür Sorge getragen werden, dass die bei der Montage der Turbine von den Aktuatoren entfernten wiederverwendbaren Montagehilfen zurück zur Montage der Aktuatoren gelangen, um sie dort erneut verwenden zu können.

Die vorliegende Erfindung betrifft somit auch eine Montagehilfe, die einerseits am Aktuator anbringbar ist und die andererseits so ausgestaltet ist, dass sie eine unzulässige Auslenkung einer Betätigungsstange des Aktuators verhindert.

Vorzugsweise kann die Montagehilfe ein in einer Längsmittelebene geteiltes Gehäuse aufweisen, wobei die beiden Gehäusehälften lösbar aneinander befestigt werden können, bspw. mittels Schraubverbindungen oder Schnappverbindungen. Hierbei können die Gehäusehälften als Einzelteile ausgeführt oder durch ein einerseits angeordnetes bewegliches Scharnier miteinander verbunden sein. Somit muss nur eine Seite der Gehäusehälften mit den Verbindungsmitteln fixiert werden. Das Scharnier kann derart ausgeführt sein, dass die Gehäuseteile lösbar oder unlösbar miteinander verbunden sind. Ein unlösbares Scharnier kann materialeinheitlich und/oder unlösbar verbunden mit den Gehäuseteilen ausgeführt sein. Vorzugsweise ist ein derartiges Scharnier als Filmscharnier ausgeführt. Eine andere Ausgestaltung des Scharniers kann durch die Montage von z.B. Bolzen und Hülsen gebildet werden.

Die Montagehilfe kann bspw. so konzipiert sein, dass sie ein Gelenk der Betätigungsstange kapselt. Hierdurch kann das Gelenk vor Beschädigungen und vor Verunreinigungen geschützt werden. Ebenso lassen sich dadurch Überlastungen des Gelenks vermeiden. Besonders vorteilhaft ist dabei eine Ausführungsform, bei der die Montagehilfe eine Beweglichkeit blockiert, die Stangenabschnitte der Betätigungsstange, die über das Gelenk miteinander verbunden sind, relativ zueinander besitzen. Somit führt die Montagehilfe zu einer vollständigen oder zumindest zu einer wesentlichen Entlastung des Gelenks, wodurch dieses vor einer Überlastung geschützt ist.

Zweckmäßig kann die Montagehilfe so gestaltet sein, dass die Betätigungsstange mit der Montagehilfe durch eine Durchgangsöffnung hindurchführbar ist, die in einem Flansch ausgebildet ist, an dem der Aktuator an einer vom Waste-Gate-Ventil abgewandten Seite angeordnet ist. Die Dimensionierung der Montagehilfe berücksichtigt hierbei die Einbausituation des Aktuators.

Die vorliegende Erfindung betrifft folglich auch einen Aktuator, der bereits mit einer derartigen Montagehilfe ausgestattet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine vereinfachte isometrische Ansicht eines Abgasturboladers mit Aktuator ohne Montagehilfe,
- Fig. 2: isometrische Ansichten einer als Mehrwegteil ausgestalteten Montagehilfe im geöffneten Zustand a und im geschlossenen Zustand b,
- Fig. 3: eine isometrische Ansicht einer als Einwegteil ausgestalteten Montagehilfe,
- Fig. 4: eine isometrische Ansicht des Turboladers mit Aktuator und mit der Montagehilfe aus Fig. 2,
- Fig. 5: eine isometrische Ansicht des Turboladers mit Aktuator und mit der Montagehilfe aus Fig. 3.

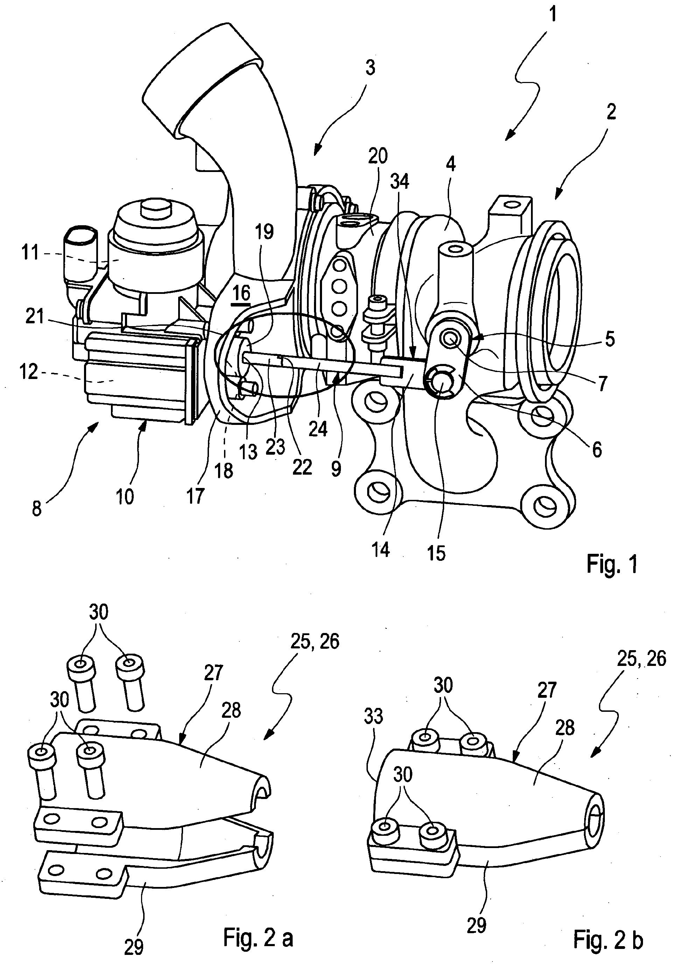

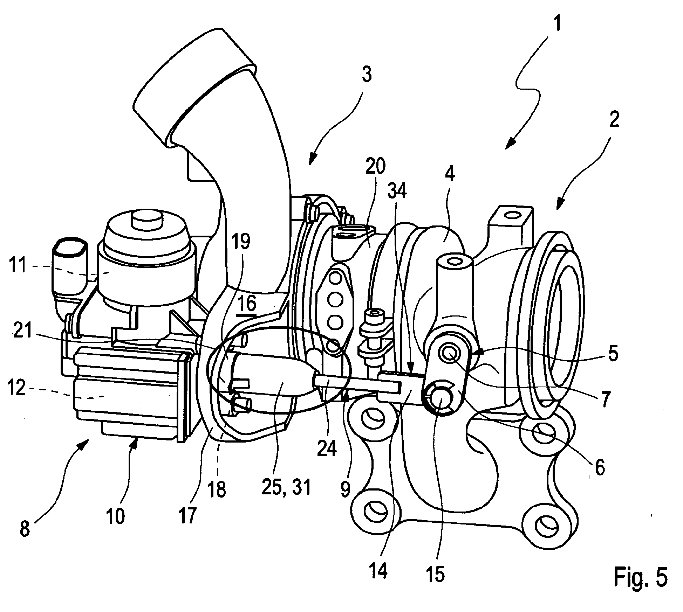

Entsprechend den Figuren 1, 4 und 5 umfasst ein Abgasturbolader 1 eine Turbine 2 und einen Verdichter 3, wobei ein nicht gezeigtes Turbinenrad der Turbine 2 und ein nicht gezeigtes Verdichterrad des Verdichters 3 über eine gemeinsame, hier ebenfalls nicht gezeigte Welle miteinander drehfest verbunden sind. Die Turbine 2 enthält in einem Turbinengehäuse 4 ein Waste-Gate-Ventil 5, von dem hier nur ein Antriebshebel 6 erkennbar ist, der über eine Antriebswelle 7 mit einem hier nicht erkennbaren Ventilglied, insbesondere eine Ventilklappe, des Waste-Gate-Ventils 5 drehfest verbunden ist.

Zur Betätigung des Waste-Gate-Ventils 5 ist ein Aktuator 8 vorgesehen, der auf geeignete Weise relativ zur Turbine 2 montiert ist und der eine Betätigungsstange 9 aufweist, über die der Aktuator 8 mit dem Waste-Gate-Ventil 5 antriebsmäßig gekoppelt ist. Bspw besitzt der Aktuator 8 in einem Aktuatorgehäuse 10 einen hier verdeckten Antrieb 11, der z. B. durch einen Elektromotor gebildet sein kann. Dieser Antrieb 11 ist im Aktuatorgehäuse 10 untergebracht und kann mit einem ebenfalls im Aktuatorgehäuse 10 untergebrachten Getriebe 12 gekoppelt sein, das hier ebenfalls verdeckt ist. Jedenfalls ist der Antrieb 11 indirekt über das Getriebe 12 oder - falls kein Getriebe 12 vorhanden ist - direkt mit einem Eingangsende 13 der Betätigungsstange 9 verbunden, um insbesondere lineare, im Wesentlichen bidirektionale Antriebsbewegungen in die Betätigungsstange 9 einleiten zu können. Die Betätigungsstange 9 ist an ihrem Ausgangsende 14 mit dem Waste-Gate-Ventil 5, hier mit dem Antriebshebel 6 verbunden. Eine entsprechende Antriebskopplung 15 ist dabei von der Antriebswelle 7 beabstandet. Somit führen bidirektionale Bewegungen der Betätigungsstange 9 zu Schwenkbewegungen des Antriebshebels 6 um eine Längsmittelachse der Antriebswelle 7. Das Ausgangsende 14 der Betätigungsstange 9 ist dabei durch ein Verbindungselement 34 gebildet, das im Rahmen der Herstellung des Aktuators 8 an das vom Aktuatorgehäuse 10 entfernte Ende der Betätigungsstange 9 angebaut, insbesondere angeschweißt, wird und das anschließend das Ausgangsende 14 der Betätigungsstange 9 definiert bzw. bildet. Die Antriebskopplung 15 zwischen der Betätigungsstange 9 und dem Antriebshebel 6 erfolgt dabei über besagtes Verbindungselement 34.

Im Beispiel ist der Aktuator 8 an einem Verdichtergehäuse 16 befestigt, und zwar an einem Flansch 17, der hierfür am Verdichtergehäuse 16 ausgeformt ist und davon nach außen absteht. Der Aktuator 8 ist dabei an einer vom Waste-Gate-Ventil 5 abgewandten Seite an besagtem Flansch 17 angeordnet. Der Flansch 17 besitzt eine Durchgangsöffnung 18, durch die ein der Betätigungsstange 9 zugeordneter Bereich 19 des Aktuators 8 bzw. des Aktuatorgehäuses 10 hindurchführbar ist. Somit kann sich die Betätigungsstange 9 auf der dem Waste-Gate-Ventil 5 zugewandten Seite des Flansches 17 vom Aktuator 8 bis zum Waste-Gate-Ventil 5 erstrecken.

Im Beispiel sind das Verdichtergehäuse 16 und das Turbinengehäuse 4 an einem Lagergehäuse 20 angebracht, in dem die zuvor genannte Welle, welche das Turbinenrad mit dem Verdichterrad verbindet, gelagert ist.

In einem durch eine Ellipse markierten Bereich 21 kann die Betätigungsstange 9 ein Gelenk 22 aufweisen, über das zwei Stangenabschnitte 23 und 24 gelenkig miteinander verbunden sind. Der eine Stangenabschnitt 23 ist dem Eingangsende 13 der Betätigungsstange 9 zugeordnet und wird im Folgenden auch als eingangsseitiger Stangenabschnitt 23 bezeichnet. Der andere Stangenabschnitt 24 ist dem Ausgangsende 14 der Betätigungsstange 9 zugeordnet und wird im Folgenden auch als ausgangsseitiger Stangenabschnitt 24 bezeichnet. Durch das Gelenk 22 besitzen die beiden daran angrenzenden bzw. darüber miteinander verbundenen Stangenabschnitte 23,24 relativ zueinander eine gewisse Beweglichkeit. Diese Beweglichkeit kann bspw. dafür erforderlich sein, dass eine vom Aktuator 8 in den eingangsseitigen Stangenabschnitt 23 eingeleitete zweidimensionale Linearbewegung kinematisch mit einer Kreisbahnbewegung der Kopplungsstelle 15 verbunden werden muss.

Der Bereich 21 bzw. die Betätigungsstange 9 ist während der Montage des Aktuators 8 Missbrauchskräften ausgesetzt, die bei unsachgemäßer Montage oder bei nicht hinreichend sorgfältiger Montage zu unerwünschten bzw. unzulässigen Auslenkungen der Betätigungsstange 9, insbesondere quer zu deren Längsachse, führen können, wodurch aufwändige Nacharbeiten erforderlich werden können.

Um hier die Montage des Aktuators 8 am Turbolader 1 zu vereinfachen, wird eine in den Figuren 2 bis 5 gezeigte Montagehilfe 25 verwendet. Diese Montagehilfe 25 kann am Aktuator 8 angebracht werden und verhindert im angebrachten Zustand unzulässige Auslenkungen der Betätigungsstange 9. Somit kann eine Beschädigungsgefahr bis zum Abschluss der Montage des Aktuators 8 am Turbolader 1 signifikant reduziert werden. Nach Abschluss der Montage kann die Montagehilfe 25 vom Aktuator 8 entfernt werden, sodass dann der in Fig. 1 gezeigte Zustand vorliegt.

In den Figuren 2a und 2b ist eine Montagehilfe 25 dargestellt, die als Mehrwegteil 26 konzipiert ist und somit eine wiederverwendbare Montagehilfe 25 repräsentiert. Bspw. kann diese wiederverwendbare Montagehilfe 25 ein Gehäuse 27 aufweisen, das in einer Längsmittelebene geteilt ist und dementsprechend zwei Gehäusehälften 28,29 aufweist, die aneinander lösbar befestigt werden können. Bspw. können hierzu mehrere Verschraubungen 30 vorgesehen sein. Alternativ könnten die Gehäusehälften 28, 29 auch über ein Scharnier miteinander verbunden sein und nur an der gegenüberliegenden Seite mit lösbaren Verbindungsmitteln aneinander fixiert werden.

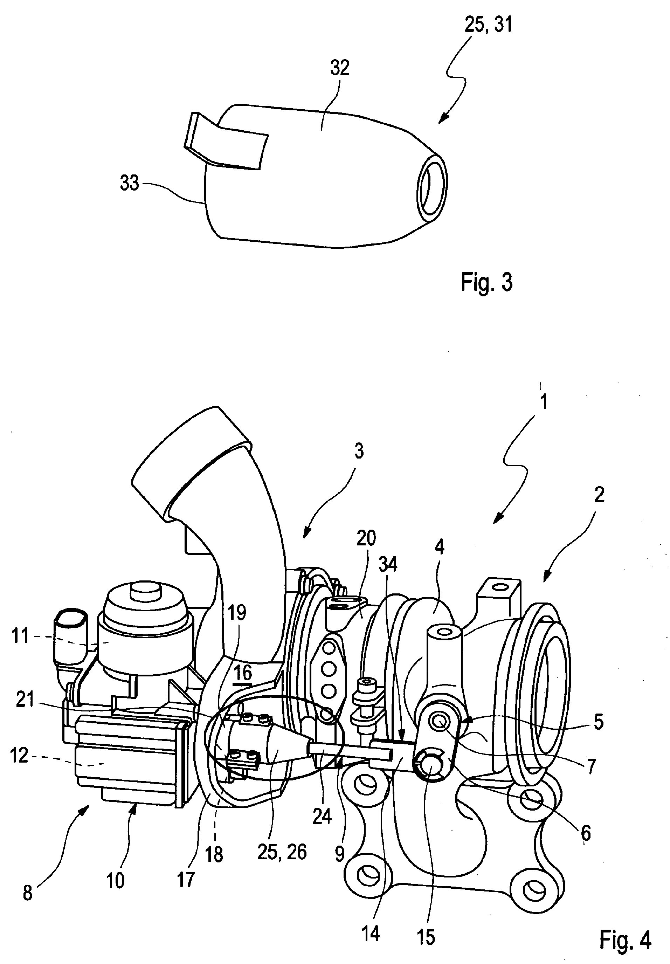

Alternativ zum Mehrwegteil 26 der Figuren 2a und 2b zeigt Fig. 3 eine Montagehilfe 25, die als Einwegteil 31 konzipiert ist und nach Gebrauch weggeworfen bzw. recycelt werden kann. Insbesondere kann diese nicht-wiederverwendbare Montagehilfe 25 so konzipiert sein, dass sie zum Entfernen vom Aktuator 8 zerstört werden muss. Insbesondere kann dabei zumindest eine Sollbruchstelle in einem Gehäuse 32 der Montagehilfe 25 ausgebildet sein, die bspw. eine Teilung des Gehäuses 32 vereinfacht, um das Gehäuse 32 von der Betätigungsstange 9 bzw. vom Aktuator 8 entfernen zu können.

Die Montagehilfe 25 kann - grundsätzlich unabhängig davon, ob sie als Mehrwegteil 26 oder als Einwegteil 31 konzipiert ist - bereits im Rahmen der Herstellung des Aktuators 8 am Aktuator 8 angebracht werden, bspw. um bereits eine Transportsicherung für den Aktuator 8 bereitstellen zu können. Zur Reduzierung des logistischen Aufwands kann für die Verwendung als Transportsicherung die Ausgestaltung als Einwegteil 31 bevorzugt sein.

Die Montagehilfe 25 kann zweckmäßig so ausgestaltet sein, dass sie das zuvor genannte Gelenk 22 kapselt, wenn sie am Aktuator 8 montiert ist. Hierdurch lassen sich Überlastungen des Gelenks 22 vermeiden. Besonders vorteilhaft ist eine Ausführungsform, bei welcher die Montagehilfe 25 die zuvor genannte Beweglichkeit zwischen den beiden Stangenabschnitten 23,24, die mit Hilfe des Gelenks 22 erzeugt wird, durch den Anbau der Montagehilfe 25 am Aktuator 8 blockiert wird. Auf diese Weise können unerwünschte Querbelastungen des Gelenks 22 aufgrund von Querkräften, die auf den ausgangsseitigen Stangenabschnitt 24 aufgebracht werden, vermieden werden.

Zweckmäßig ist die Montagehilfe 25 so dimensioniert, dass sie ebenfalls durch die Durchgangsöffnung 18 hindurchsteckbar ist, wenn der Aktuator 8 mit daran angebrachter Montagehilfe 25 am Flansch 17 montiert wird.

Für die Montage des Aktuators 8 am Turbolader 1 wird die Montagehilfe 25 am Aktuator 8 angebracht. Die Anbringung der Montagehilfe 25 am Aktuator 8 kann entweder erst im Rahmen der Montage des Aktuators 8 am Turbolader 1 erfolgen oder bereits im Rahmen der Montage des Aktuators 8, wobei dann die Montagehilfe 25 gleichzeitig als Transportsicherung oder Transportschutz dient.

Nach der Montage des Aktuators 8 am Turbolader 1 wird die Montagehilfe 25 entfernt. Dies kann zweckmäßig dann durchgeführt werden, nachdem die Betätigungsstange 9 mit dem Antriebshebel 6 verbunden ist. Zweckmäßig ist die Montagehilfe 25 hierzu so konzipiert, dass sie im Rahmen der Herstellungstoleranzen ausreichende Relativbewegungen der Betätigungsstange 9 zulässt, um diese mit dem Waste-Gate-Ventil 5 verbinden zu können.

Das Entfernen der Montagehilfe 25 erfolgt beim Mehrwegteil 26 durch Lösen der lösbaren Verbindung, hier durch Lösen der Verschraubungen 30. Beim Einwegteil 31 kann das Entfernen der Montagehilfe 25 insbesondere dadurch erfolgen, dass die Montagehilfe 25 zerstört wird.

Die Montagehilfe 25 kann ein Metallbauteil sein, insbesondere dann, wenn sie als Mehrwegteil 26 konzipiert ist. Alternativ kann die Montagehilfe 25 auch ein Kunststoffteil sein, vorzugsweise dann, wenn sie als Wegwerfteil 31 konzipiert ist. Andere Mehrweg-Montagehilfen 25 können auch aus Kunststoff bestehen. Hierbei ist es vorteilhaft, wenn die Montagehilfe 25 als Kunststoffspritzgussteil ausgeführt ist.

Entsprechend einer besonders vorteilhaften Ausführungsform kann die Montagehilfe 25 so konzipiert sein, dass sie am Aktuatorgehäuse 10 abgestützt und/oder fixiert ist, wenn sie am Aktuator 8 angebracht ist. Hierzu kann die Montagehilfe 25 eine ebene Stirnseite 33 aufweisen, die einer ebenen Stirnseite des Bereichs 19 des Aktuatorgehäuses 10 axial zur Anlage kommt.

Gemäß einer anderen vorteilhaften Ausführungsform kann die als Einwegteil 31 konzipierte Montagehilfe 25 integral an einem Bestandteil des Aktuatorgehäuses 10 ausgeformt sein. Bspw. kann die Montagehilfe 25 mit dem zuvor genannten Bereich 19 des Aktuatorgehäuses 10 in einem Stück spritzgeformt sein. Dabei kann im Bereich der Stirnseite 33 eine Sollbruchstelle vorgesehen sein, die es nach der Montage des Aktuators 8 am Turbolader 1 ermöglicht, die Montagehilfe 25 einfach zu entfernen.

## Patentansprüche

1. Verfahren zum Montieren eines Aktuators (8) zur Betätigung eines Waste-Gate-Ventils (5) einer Turbine, Insbesondere eines Abgasturboladers (1),
- bei dem der Aktuator (8) mit einer daran angebrachten Montagehilfe (25), die eine unzulässige Auslenkung einer Betätigungsstange (9) des Aktuators (8) verhindert, relativ zur Turbine (2) oder am Abgasturbolader (1) montiert wird,
- bei dem nach dem Montieren des Aktuators (8) die Montagehilfe (25) vom Aktuator (8) entfernt wird.

2. Verfahren nach Anspruch 1,
**dadurch gekennzeichnet,**
**dass** vor dem Montieren des Aktuators (8) bei daran angebrachter Montagehilfe (25) ein Verbindungselement (34) an die Betätigungsstange (9) angebaut wird,
das anschlleßend ein Ausgangsende (14) der Betätigungsstange (9) bildet.

3. Verfahren nach Anspruch 1 oder 2,
**dadurch gekennzeichnet,**
**dass** die Montagehilfe (25) so ausgestaltet Ist, dass sie ein axiales Verschleben der Betätigungsstange (9) verhindert.

4. Verfahren nach einem der Ansprüche 1 bis 3,
**dadurch gekennzeichnet,**
**dass** die Montagehilfe (25) als Mehrwegtell (26) ausgestaltet ist und am Aktuator (8) im Rahmen der Montage des Aktuators (8) relativ zur Turbine (2) oder am Turbolader (1) angebracht wird.

5. Verfahren nach einem der Ansprüche 1 bis 3,
**dadurch gekennzeichnet,**
**dass** die Montagehilfe (25) als Einwegteil (31) ausgestaltet ist und am Aktuator (8) im Rahmen der Herstellung des Aktuators (8) angebracht wird.

6. Aktuator (8) mit einer auslenkbaren Betätigungsstange (9) zur Betätigung eines Waste-Gate-Ventils (5) einer Turbine (2), Insbesondere eines Abgasturboladers (1), und mit einer Montagehilfe (25), die am Aktuator (8) angebracht ist und so ausgestaltet Ist, dass sie eine unzulässige Auslenkung der Betätigungsstange (9) des Aktuators (8) verhindert, wobei die Montagehilfe (25) dafür vorgesehen ist, dass sie nach dem Montieren des Aktuators (8) vom Aktuator (8) entfernt werden kann.

7. Aktuator nach Anspruch 6,
**dadurch gekennzeichnet,**
**dass** die Montagehilfe (25) eine axiale Verschiebung der Betätigungsstange (9) verhindert.

8. Aktuator nach Anspruch 6 oder 7,
**dadurch gekennzeichnet,**
**dass** die Montagehilfe (25) ein in einer Längsmittelebene geteiltes Gehäuse (27) aufweist, wobei die beiden Gehäusehälften (28,29) aneinander lösbar befestigbar, insbesondere verschraubbar, sind.

9. Aktuator nach einem der Ansprüche 6 bis 8,
**dadurch gekennzeichnet,**
**dass** die Montagehilfe (25) als Mehrwegteil (26) oder als Einwegteil (31) konzipiert ist.

10. Aktuator nach einem der Ansprüche 6 bis 9,
**dadurch gekennzeichnet,**
**dass** die Montagehilfe (25) ein Gelenk (22) der Betätigungsstange (9) kapselt, wenn sie am Aktuator (8) angebracht ist.

11. Aktuator nach Anspruch 10,
**dadurch gekennzeichnet,**
**dass** die Montagehilfe (25) eine Beweglichkeit blockiert, die Stangenabschnitte (23,24) der Betätigungsstange (9) relativ zueinander besitzen, die über das Gelenk (22) miteinander verbunden sind, wenn die Montagehilfe (25) am Aktuator (8) angebracht ist.

12. Aktuator nach einem der Ansprüche 6 bis 11,
**dadurch gekennzeichnet,**
**dass** die Montagehilfe (25) so gestaltet ist, dass die Betätigungsstange (9) mit der Montagehilfe (25) durch eine Durchgangsöffnung (18) hindurchsteckbar ist, die In einem Flansch (17) ausgebildet ist, an dem der Aktuator (8) an einer vom Waste-Gate-Ventil (5) abgewandten Seite angeordnet ist.

13. Verwendung einer Montagehilfe (25) an einem Aktuator (8), der zur Betätigung eines Waste-Gate-Ventils (5) einer Turbine (2), insbesondere eines Abgasturboladers (1), eine Betätigungsstange (9) aufweist,
- während einer Montage des Aktuators (8) relativ zur Turbine (2) oder am Turbolader (1), oder
- während einer Lagerung oder eines Transports des Aktuators (8) vor der Montage relativ zur Turbine (2) oder am Turbolader (1), oder
- beim Anbringen eines Verbindungselements (34) an der Betätigungsstange (9), das anschließend ein Ausgangsende (14) der Betätigungsstange (9) bildet,
- wobei die an der Betätigungsstange (9) angebrachte Montagehilfe (25) eine unzulässige Auslenkung der Betätigungsstange (9) verhindert,
- wobei die Montagehilfe (25) dafür vorgesehen ist, dass sie nach dem Montleren des Aktuators (8) vom Aktuator (8) entfernt wird.

## Claims

1. Technique for mounting an actuator (8) for actuating a wastegate valve (5) of a turbine, in particular an exhaust gas turbo-charger (1)
- in which the actuator (8) is mounted relative to the turbine (2) or on the exhaust gas turbo-charger (1) with a mounting aid (25) attached thereto which prevents an impermissible excursion of an actuating rod (9) of the actuator (8),
- in which the mounting aid (25) is removed from the actuator (8) after mounting the actuator (8).

2. Technique according to claim 1, **characterised in that** before mounting the actuator (8) with the mounting aid (25) attached thereto, a connecting piece (34) is attached to the actuating rod (9) which then forms an output end (14) of the actuating rod(9).

3. Technique according to claim 1 or claim 2, **characterised in that** the mounting aid (25) is so arranged that it prevents an axial displacement of the actuating rod (9).

4. Technique according to one of claims 1 to 3, **characterised in that** the mounting aid (25) is designed as a reusable part (26) and is attached to the actuator (8) in the course of mounting the actuator (8) relative to the turbine (2) or on the exhaust gas turbo-charger (1).

5. Technique according to one of claims 1 to 3, **characterised in that** the mounting aid (25) is designed as a non-reusable part (31) and is attached to the actuator (8) in the course of manufacturing the actuator (8).

6. Actuator (8) with an extendable actuating rod (9) for actuating a wastegate valve (5) of a turbine (2), in particular an exhaust gas turbo-charger (1), and with a mounting aid (25) attached to the actuator (8) and so arranged as to prevent an impermissible excursion of the actuator rod (9) of the actuator (8), the mounting aid (25) being so arranged that it can be removed from the actuator (8) after mounting the actuator (8).

7. Actuator according to claim 6, **characterised in that** the mounting aid (25) prevents an axial displacement of the actuating rod (9).

8. Actuator according to claim 6 or claim 7, **characterised in that** the mounting aid (25) has a housing (27) divided along its longitudinal centre line, whereby the two halves of the housing (28, 29) can be temporarily fastened together, in particular by screw fastening.

9. Actuator according to one of claims 6 to 8, **characterised in that** the mounting aid (25) is designed as a reusable part (26) or a non-reusable part (31).

10. Actuator according to one of claims 6 to 9, **characterised in that** the mounting aid (25) encloses a flexible joint (22) of the actuator rod (9) when attached to the actuator (8).

11. Actuator according to claim 10, **characterised in that** when the mounting aid (25) is attached to the actuator (8), the mounting aid (25) prevents relative movement between the sections (23, 24) of the actuator rod (9) connected together by the flexible joint (22).

12. Actuator according to one of claims 6 to 11, **characterised in that** the mounting aid (25) is so arranged that actuator rod (9) with the mounting aid (25) can be pushed through an opening (18) formed in a flange (17) on which the actuator (8) is arranged on a side away from the wastegate valve (5).

13. Use of a mounting aid (25) on an actuator (8) that has an actuating rod (9) to actuate a wastegate valve (5) of a turbine (2), in particular an exhaust gas turbo-charger (1),
- during mounting of the actuator (8) relative to the turbine (2) or on the turbo-charger (1) or
- during storage or transport of the actuator (8) before mounting relative to the turbine (2) or on the turbo-charger (1) or
- while attaching a connecting piece (34) to the actuating rod (9) which then forms an output end (14) of the actuating rod (9),
- in which the mounting aid (25) attached to the actuating rod (9) prevents an impermissible excursion of an actuating rod (9),
- in which the mounting aid (25) is designed to be removed from the actuator (8) after mounting the actuator (8).

## Revendications

1. Procédé servant à monter un actionneur (8) servant à activer une soupape de décharge (5) d'une turbine, en particulier d'un turbocompresseur à gaz d'échappement (1),
- où l'actionneur (8) est monté par rapport à la turbine (2) ou au niveau du turbocompresseur à gaz d'échappement (1) à l'aide d'une aide au montage (25) installée au niveau de l'actionneur, laquelle empêche une déviation non permise d'une tige d'activation (9) de l'actionneur (8),
- où l'aide au montage (25) est retirée de l'actionneur (8) après le montage de l'actionneur (8).

2. Procédé selon la revendication 1,
**caractérisé en ce**
**qu'**un élément de liaison (34) est placé au niveau de la tige d'activation (9) avant le montage de l'actionneur (8), à proximité de l'aide au montage (25) installée au niveau de ce dernier, lequel élément de liaison forme par la suite une extrémité de sortie (14) de la tige d'activation (9).

3. Procédé selon la revendication 1 ou 2,
**caractérisé en ce**
**que** l'aide au montage (25) est configurée de telle manière qu'elle empêche un déplacement par coulissement axial de la tige d'activation (9).

4. Procédé selon l'une quelconque des revendications 1 à 3,
**caractérisé en ce**
**que** l'aide au montage (25) est configurée sous la forme d'une pièce réutilisable (26) et est installée au niveau de l'actionneur (8) dans le cadre du montage de l'actionneur (8) par rapport à la turbine (2) ou au niveau du turbocompresseur (1).

5. Procédé selon l'une quelconque des revendications 1 à 3,
**caractérisé en ce**
**que** l'aide au montage (25) est configurée sous la forme d'une pièce réutilisable (31) et est installée au niveau de l'actionneur (8) dans le cadre de la fabrication de l'actionneur (8).

6. Actionneur (8) comprenant une tige d'activation (9) pouvant être déviée servant à activer une soupape de décharge (5) d'une turbine (2), en particulier d'un turbocompresseur à gaz d'échappement (1), et comprenant une aide au montage (25), qui est installée au niveau de l'actionneur (8) et qui est configurée de telle manière qu'elle empêche une déviation non permise de la tige d'activation (9) de l'actionneur (8), où l'aide au montage (25) est prévue afin de pouvoir être retirée de l'actionneur (8) après le montage de l'actionneur (8).

7. Actionneur selon la revendication 6,
**caractérisé en ce**
**que** l'aide au montage (25) empêche un déplacement par coulissement axial de la tige d'activation (9).

8. Actionneur selon la revendication 6 ou 7,
**caractérisé en ce**
**que** l'aide au montage (25) présente un boîtier (27) divisé dans un plan central longitudinal, où les deux moitiés de boîtier (28, 29) peuvent être fixées, en particulier vissées, l'une à l'autre de manière amovible.

9. Actionneur selon l'une quelconque des revendications 6 à 8,
**caractérisé en ce**
**que** l'aide au montage (25) est mise au point sous la forme d'une pièce réutilisable (26) ou sous la forme d'une pièce jetable (31).

10. Actionneur selon l'une quelconque des revendications 6 à 9,
**caractérisé en ce**
**que** l'aide au montage (25) encapsule une articulation (22) de la tige d'activation (9), lorsqu'elle est installée au niveau de l'actionneur (8).

11. Actionneur selon la revendication 10,
**caractérisé en ce**
**que** l'aide au montage (25) bloque une mobilité que des segments de tige (23, 24) de la tige d'activation (9) possèdent les uns par rapport aux autres, lesquels sont reliés les uns aux autres par l'intermédiaire de l'articulation (22) lorsque l'aide au montage (25) est installée au niveau de l'actionneur (8).

12. Actionneur selon l'une quelconque des revendications 6 à 11,
**caractérisé en ce**
**que** l'aide au montage (25) est configurée de telle manière que la tige d'activation (9) peut être insérée, par l'aide au montage (25), à travers une ouverture de passage (18), laquelle est réalisée dans une bride (17), au niveau de laquelle l'actionneur (8) est disposé au niveau d'un côté opposé à la soupape de décharge (5).

13. Utilisation d'une aide au montage (25) au niveau d'un actionneur (8), qui présente, aux fins de l'activation d'une soupape de décharge (5) d'une turbine (2), en particulier d'un turbocompresseur à gaz d'échappement (1), une tige d'activation (9),
- au cours d'un montage de l'actionneur (8) par rapport à la turbine (2) ou au niveau du turbocompresseur (1), ou
- au cours d'un entreposage ou d'un transport de l'actionneur (8) avant le montage par rapport à la turbine (2) ou au niveau du turbocompresseur (1), ou
- lors de l'installation d'un élément de liaison (34) au niveau de la tige d'activation (9), lequel élément de liaison forme par la suite une extrémité de sortie (14) de la tige d'activation (9),
- où l'aide au montage (25) installée au niveau de la tige d'activation (9) empêche une déviation non permise de la tige d'activation (9),
- où l'aide au montage (25) est prévue afin d'être retirée de l'actionneur (8) après le montage de l'actionneur (8).
